Europäisches Patentamt

European Patent Office

Office européen des brevets

(19)

(11) Veröffentlichungsnummer: **0 037 470**
**B1**

(12) **EUROPÄISCHE PATENTSCHRIFT**

(45) Veröffentlichungstag der Patentschrift:
19.06.85

(21) Anmeldenummer: 81101777.1

(22) Anmeldetag: 11.03.81

(51) Int. Cl.⁴: **C 08 J 9/14**, C 08 J 3/28 //
(C08J9/14,
C08L61:28),(C08J3/28,
C08L61:28)

(54) Verfahren zur Herstellung von elastischen Schaumstoffen auf Basis eines Melamin/Formaldehyd-Kondensationsprodukts.

(30) Priorität: 27.03.80 DE 3011769

(43) Veröffentlichungstag der Anmeldung:
14.10.81 Patentblatt 81/41

(45) Bekanntmachung des Hinweises auf die Patenterteilung:
19.06.85 Patentblatt 85/25

(84) Benannte Vertragsstaaten:
AT BE CH DE FR GB IT LI NL SE

(56) Entgegenhaltungen:
DE - C - 870 027
FR - A - 1 300 107
US - A - 3 063 953

Lueger, "Lexikon der Technik", Bd. 2, S. 185, Bd. 16, S. 126

Die Akte enthält technische Angaben, die nach dem Eingang der Anmeldung eingereicht wurden und die nicht in dieser Patentschrift enthalten sind.

(73) Patentinhaber: BASF Aktiengesellschaft,
Carl-Bosch-Strasse 38, D-6700 Ludwigshafen (DE)

(72) Erfinder: Mahnke, Harald, Dr., Osloer Weg 48,
D-6700 Ludwigshafen (DE)
Erfinder: Kreibiehl, Guenter, Sperlinggasse 8,
D-6700 Ludwigshafen (DE)
Erfinder: Weber, Heinz, Dr., Am Wehrhaus 26,
D-6718 Gruenstadt 1 (DE)
Erfinder: Woerner, Frank Peter, Dr., Am Altenbach 18,
D-6706 Wachenheim (DE)

## Beschreibung

Die Erfindung betrifft ein Verfahren zur Herstellung von elastischen Schaumstoffen auf Basis eines Melamin/Formaldehyd-Kondensationsproduktes, bei dem man eine wäßrige oder alkoholische Lösung oder Dispersion, welche ein Melamin-/Formaldehyd-Vorkondensat, einen Emulgator, ein Treibmittel und einen Härter sowie ggf. übliche Zusatzstoffe enthält, durch Ultrahochfrequenz-Bestrahlung verschäumt und den Schaum durch Vernetzen des Vorkondensates aushärtet.

In den Patentanmeldungen DE-OS 2 915 457 und DE-OS 2 915 467 sind elastische Schaumstoffe auf Basis von Melamin/Formaldehyd-Kondensationsprodukten sowie Verfahren zu ihrer Herstellung beschrieben. Dabei wird eine hochkonzentrierte treibmittelhaltige Lösung oder Dispersion eines Melamin-/Formaldehyd-Vorkondensats verschäumt und der Schaum ausgehärtet, wobei das Verschäumen durch Erhitzen auf eine Temperatur oberhalb des Siedepunktes des Treibmittels so durchgeführt wird, daß zunächst ein geringer Viskositätsanstieg erfolgt, und der Vernetzungsvorgang unter starker Viskositätserhöhung im wesentlichen erst dann einsetzt, wenn der Schäumvorgang beendet ist. Das Erhitzen wird vorzugsweise mit Heißluft vorgenommen, es kann auch durch Wasserdampf, Hochfrequenzbestrahlung oder Ausnutzen von Reaktionswärme geschehen.

Die erhaltenen Schaumstoffe zeigen ein hohes mechanisches Niveau und gute Schall- und Wärmedämmeigenschaften. Es ist jedoch schwierig, nach dem beschriebenen Verfahren Schaumstoff-Platten oder -Bahnen mit niedriger Dichte (unter 8 g · l$^{-1}$) und einer Schaumhöhe von mehr als 20 cm herzustellen. Schaumhöhen von mehr als 60 cm sind danach überhaupt nicht erreichbar.

Die FR-PS 1 300 107 betrifft die Herstellung von Kunstharzschäumen durch Hochfrequenzbestrahlung; insbesondere ist das Aushärten von mechanisch hergestellten Schäumen im Hochfrequenzfeld beschrieben. Weiterhin ist angedeutet, daß man eine treibmittelhaltige Masse durch Bestrahlung aufschäumen und härten kann. Beim Versuch, ein treibmittelhaltiges Melaminharz im Kondensatorfeld mit Hochfrequenz zu verschäumen, wird jedoch kein brauchbarer Schaumstoff erhalten.

Der vorliegenden Erfindung lag nun die Aufgabe zugrunde, das beschriebene Verfahren zu verbessern. Insbesondere sollte es möglich werden, Schaumstoffe mit niedrigen Dichten auch unterhalb von 8 g · l$^{-1}$, bis herab zu 1,6 g · l$^{-1}$, herzustellen. Ferner sollten Schaumhöhen von mehr als 60 cm erreichbar werden.

Diese Aufgabe wird erfindungsgemäß dadurch gelöst, daß man das Erhitzen durch dielektrische Strahlung hoher Intensität vornimmt.

Gegenstand der Erfindung ist demzufolge ein Verfahren zur Herstellung von elastischen Schaumstoffen auf Basis eines Melamin/Formaldehyd-Kondensationsproduktes durch Verschäumen einer wäßrigen oder alkoholischen Lösung oder Dispersion, welche ein Melamin/Formaldehyd-Vorkondensat, einen Emulgator, ein Treibmittel und einen Härter, sowie ggf. übliche Zusatzstoffe enthält, und anschließendem Vernetzen des Vorkondensates, bei dem zum Verschäumen und Vernetzen die Lösung oder Dispersion durch Bestrahlung mit Mikrowellen im Frequenzbereich von 0,915 bis 100 GHz derart erhitzt wird, daß die Leistungsaufnahme der Lösung oder Dispersion zwischen 5 und 200 kW pro kg Wasser in der Lösung bzw. Dispersion liegt.

Nach diesem Verfahren lassen sich ohne Schwierigkeiten Schaumstoffe auf Basis von Melamin-/Formaldehyd-Kondensaten herstellen, deren Dichte unter 8 g · l$^{-1}$ und deren Schaumhöhe oberhalb von 60 cm liegt.

Überraschenderweise zeigte sich bei dieser Arbeitsweise, daß das Volumen des Schaums wesentlich größer ist als das Gasvolumen des eingesetzten Treibmittels. Beim thermischen Verschäumen bewirkt praktisch nur das eingesetzte und beim Erhitzen ein Gas bildende Treibmittel die Schaumbildung, d. h. ein Mol Treibmittel ergibt unter Normalbedingungen maximal 22,4 l Schaum. Beim erfindungsgemäßen Verfahren wird überraschenderweise wesentlich mehr Schaum, beispielsweise das fünffache Volumen gebildet. Diese Erscheinung ist darauf zurückzuführen, daß durch die Ultrahochfrequenz-Bestrahlung der wäßrigen Melaminharz-Lösung bzw. -Dispersion nicht nur das eingesetzte Treibmittel, sondern auch Wasser verdampft, welches als zusätzliches Treibmittel wirkt. Dieser Effekt ist von großer technischer Bedeutung, da auf diese Weise verhältnismäßig sehr viel weniger flüchtiges Treibmittel eingesetzt und verdampft werden muß, so daß dieses Verfahren wesentlich umweltfreundlicher ist als das beschriebene Verfahren, bzw. daß wesentlich geringere Mengen des verdampften Treibmittels rückgewonnen werden müssen.

Ein weiterer Vorteil ist darin zu sehen, daß der fertige Schaum aus der Schäumanlage praktisch trocken entnommen werden kann. Schließlich wäre es schwierig, wenn nicht gar unmöglich, die zum Erreichen von sehr niedrigen Dichten (kleiner als 4 g · l$^{-1}$) notwendigen großen Treibmittelmengen in der Dispersion bzw. Lösung zu emulgieren, wenn das Wasser nicht die wesentliche Treibmittelfunktion ausüben würde.

Bei dem erfindungsgemäßen Verfahren geht man aus von einem Melamin/Formaldehyd-Vorkondensat. Melamin-/Formaldehyd-Kondensationsprodukte können neben Melamin bis zu 50, vorzugsweise bis zu 20 Gew.-% anderer Duroplastbildner, und neben Formaldehyd bis zu 50, vorzugsweise bis zu 20 Gew.-% anderer Aldehyde einkondensiert enthalten. Besonders bevorzugt ist ein unmodifiziertes Melamin-/Formaldehyd-Kondensationsprodukt. Als Duroplastbildner kommen beispielsweise in Frage: alkylsubstituiertes Melamin, Harnstoff, Urethane, Carbonsäureamide, Dicyandiamid, Guanidin,

**0 037 470**

Sulfurylamid, Sulfonsäureamide, aliphatische Amine, Phenol und dessen Derivaten. Als Aldehyde können z. B. Acetaldehyd, Trimethylolacetaldehyd, Acrolein, Benzaldehyd, Furfurol, Glyoxal, Phthalaldehyd und Terephthalaldehyd eingesetzt werden. Weitere Einzelheiten über Melamin-/Formaldehyd-Kondensationsprodukte finden sich in Houben—Weyl, Methoden der organischen Chemie, Band 14/2, 1963, Seiten 319 bis 402. Das Molverhältnis Duroplastbildner zu Aldehyd kann in weiten Grenzen zwischen 1 : 1,5 und 1 : 5 schwanken; im Falle von Melamin-/Formaldehyd-Kondensaten liegt es vorzugsweise zwischen 1 : 2,5 und 1 : 3,5. Die Melaminharze enthalten vorteilhaft Sulfitgruppen einkondensiert. Dies kann beispielsweise durch Zusatz von 1 bis 20 Gew.-% Natriumhydrogensulfit während oder nach der Kondensation des Harzes geschehen. Durch die Sulfitgruppen und die Hydrophilie des Harzes und damit seine Verträglichkeit mit Wasser erhöht. Außerdem werden höhere Kondensationsgrade erhalten.

Durch Verwendung eines geeigneten Emulgators, vorzugsweise in einer Menge von 0,2 bis 5 Gew.-%, bezogen auf das Harz, kann die Feinzelligkeit des Schaums beeinflußt und gezielt eingestellt werden. Er setzt die Oberflächenspannung herab und erleichtert dadurch die mit dem Schäumprozeß verbundene kontinuierliche Bildung neuer Oberflächen. Im Falle der Verwendung organischer hydrophober Treibmittel erniedrigt er die Grenzflächenspannung zwischen diesen und der hydrophilen Harz/Wasser-Phase und ermöglicht damit eine homogene Emulgierung beider Phasen. Er bewirkt also eine Stabilisierung des Systems und verhindert, daß sich dieses während des Schäumvorgangs entmischt, was einen inhomogenen Schaum zur Folge hätte. Je höher die Schäumtemperatur ist, desto wirksamer muß der Emulgator sein und in desto höherer Konzentration sollte er vorliegen. In Frage kommen anionenaktive Verbindungen, wie insbesondere Metallsalze, vorzugsweise Natriumsalze von Alkylsulfonaten und Alkylarylsulfonaten mit 8 bis 20 C-Atomen im Alkylrest; daneben sind auch Metallsalze von Sulfobernsteinsäureestern, sulfierten Ricinusölen, Alkylnaphthalinsulfonsäuren, Phenolsulfonsäuren, Schwefelsäureestern, z. B. von $C_{12}$- bis $C_{18}$-Alkylhydrogensulfaten und $C_{16}$- bis $C_{18}$-Fettalkoholhydrogensulfaten geeignet; ferner kationenaktive Verbindungen, wie Ölsäuretriäthanolaminester oder Laurylpyridiniumchlorid; sowie nicht ionogene Verbindungen wie äthoxyliertes Ricinusöl, äthoxylierte Talgfettalkohole, äthoxylierte Stearinsäure, Ölsäure oder äthoxyliertes Nonylphenol sowie Mischungen aus diesen.

Um aus einem fließfähigen Gemisch einen Schaum zu erzeugen, muß dieses ein Treibmittel enthalten, wobei sich die Menge nach der erwünschten Dichte des Schaumstoffs richtet. Prinzipiell können bei dem erfindungsgemäßen Verfahren sowohl physikalische als auch chemische Treibmittel angewandt werden. Als physikalische Treibmittel bieten sich z. B. an: Kohlenwasserstoffe, halogenierte, insbesondere fluorierte Kohlenwasserstoffe, Alkohole, Äther, Ketone und Ester in flüssiger Form oder Luft und $CO_2$ als Gase. Als chemische Treibmittel kommen z. B. Isocyanate in Gemisch mit Wasser in Frage, wobei als wirksames Treibmittel $CO_2$ freigesetzt wird, ferner Carbonate und Bicarbonate im Gemisch mit Säuren, die ebenfalls $CO_2$ erzeugen, sowie Azoverbindungen, wie Azodicarbonamid. Als hauptsächliches Treibmittel wirkt aber bei dem erfindungsgemäßen Verfahren das Wasser bzw. der Alkohol, welche als Lösungsmittel in dem System enthalten sind. Bei einer bevorzugten Ausführungsform der Erfindung wird der wäßrigen Lösung bzw. Dispersion ein Hilfstreibmittel der oben beschriebenen Art beigemischt, wobei Pentan, Hexan, Trichlorfluormethan und Trichlortrifluoräthan bevorzugt sind. Es ist zweckmäßig, daß der Siedepunkt des Hilfstreibmittels deutlich unter dem des Lösungsmittels liegt, weil die Reihenfolge des Verdampfens von Hilfstreibmitteln und Treibmittel von erheblicher Bedeutung ist. Da das gebildete Schaumvolumen zum größten Teil vom verdampften Wasser und nur von einem untergeordneten Bruchteil von dem Hilfstreibmittel herrührt, kann angenommen werden, daß das Hilfstreibmittel als Keimbildner fungiert. Die Gesamttreibmittelmenge richtet sich nach der erwünschten Enddichte des Schaumstoffs; für eine Dichte von 1,6 g · l$^{-1}$ beträgt sie etwa 28 Mol pro kg Harz, für eine Dichte von 30 g · l$^{-1}$ sind etwa 1,5 Mol pro kg Harz erforderlich. Die molaren Mengen beziehen sich dabei jeweils auf das wirksame Gesamt-Treibgas. Bei der oben geschilderten bevorzugten Ausführungsform werden der wäßrigen Lösung bzw. Dispersion zwischen 1 und 40 Gew.-%, bezogen auf das Harz, eines physikalischen Hilfs-Treibmittels mit einem Siedepunkt zwischen 0 und 80° C zugesetzt; bei Pentan sind es vorzugsweise 5 bis 15 Gew.-%; bei Trichlorfluormethan 15 bis 25 Gew.-%; bei Trifluortrichloräthan 25 bis 35 Gew.-%.

Als Härter werden Verbindungen eingesetzt, welche bei Reaktionsbedingungen Protonen abspalten oder bilden, die dann die Weiterkondensation des Melaminharzes katalysieren. Die Mengen liegen zwischen 0,01 und 20, vorzugsweise zwischen 0,05 und 5 Gew.-%, bezogen auf das Harz. In Frage kommen anorganische und organische Säuren, z. B. Salzsäure, Schwefelsäure, Phosphorsäure, Ameisensäure, Essigsäure, Oxalsäure, Milchsäure, Aminosäure; latente Härter, wie Halogencarbonsäuresalze, Chloressigsäureamid, Hydrogenphosphate, Säureanhydride und Ammoniumsalze. Auch Formaldehyd selbst kann bei hohen Temperaturen unter Bildung von Ameisensäure disproportionieren und so als Härter wirken.

Die wäßrige bzw. alkoholische Lösung bzw. Dispersion ist vorzugsweise frei von weiteren Zusatzstoffen. Für manche Zwecke kann es jedoch günstig sein, bis zu 20 Gew.-%, vorzugsweise weniger als 10 Gew.-%, bezogen auf das Harz, üblicher Zusatzstoffe, wie faser- oder pulverförmiger anorganischer Verstärkungsmittel oder Füllstoffe, Pigmente, Farbstoffe, Flammschutzmittel, Weichmacher, Mittel zur Herabsetzung der Brandgastoxizität oder zur Förderung der Verkohlung zuzusetzen. Da die

3

Schaumstoffe im allgemeinen offenporig sind und Wasser aufnehmen können, kann es für manche Anwendungszwecke notwendig sein, Hydrophobierungsmittel in Mengen von 0,2 bis 5 Gew.-% zuzusetzen. In Frage kommen dabei z. B. Alkylphenole mit 5 bis 15 C-Atomen im Alkylrest, Silikone und Paraffine.

Die Zusatzstoffe werden mit der wäßrigen Lösung oder Dispersion des Melaminharzes homogen vermischt, wobei das Hilfstreibmittel ggf. auch unter Druck eingepreßt werden kann. Man kann jedoch auch von einem festen, z. B. sprühgetrockneten Melaminharz ausgehen und dieses dann mit einer wäßrigen Lösung des Emulgators und des Härters sowie ggf. dem Hilfstreibmittel vermischen.

Im Gegensatz zu dem in der Patentanmeldung DE-OS 2 915 467 beschriebenen Verfahren zur Herstellung eines elastischen Melamin/Formaldehyd-Schaumstoffs kann man bei dem erfindungsgemäßen Verfahren auch von Lösungen bzw. Dispersionen geringerer Konzentration ausgehen. Die Konzentration des Melamin/Formaldehyd-Vorkondensats in der Mischung aus Vorkondensat und Lösungsmittel kann in weiten Grenzen zwischen 55 und 85, vorzugsweise zwischen 63 und 80 Gew.-%, schwanken. Die bevorzugte Viskosität der Mischung aus Vorkondensat und Lösungsmittel liegt zwischen 1 und 3000 dPas, vorzugsweise zwischen 5 und 2000 dPas.

Beim Verschäumen der Lösung oder Dispersion des Vorkondensats erfolgt zunächst ein geringer Viskositätsanstieg, wobei eine Weiterkondensation des Vorkondensats eintritt, die Vernetzung des Kondensats unter starker Viskositätserhöhung setzt erst dann ein, wenn der Schäumvorgang im wesentlichen beendet ist.

Bei Verwendung physikalischer Hilfstreibmittel wird die Mischung auf die Siedetemperatur des Treibmittels in der Lösung bzw. Dispersion beim jeweils herrschenden Druck gebracht; bei chemischen Treibmitteln ist die Lösung bzw. Dispersion auf eine Temperatur aufzuheizen, bei der das Treibgas in hinreichender Geschwindigkeit freigesetzt wird. Erfindungsgemäß wird das erforderliche Erhitzen der Lösung bzw. Dispersion durch Ultrahochfrequenzbestrahlung durchgeführt. Bei dieser dielektrischen Strahlung kann grundsätzlich mit Mikrowellen im Frequenzbereich von 0,915 GHz bis 100 GHz gearbeitet werden. Für die industrielle Praxis stehen Frequenzen von 0,915, 2,45 und 5,8 GHz zur Verfügung, wobei 2,45 GHz besonders bevorzugt sind. Strahlungsquelle für dielektrische Strahlung ist das Magnetron, wobei auch mit mehreren Magnetronen gleichzeitig bestrahlt werden kann. Es ist darauf zu achten, daß bei der Bestrahlung die Feldverteilung möglichst homogen ist.

Die Bestrahlung der zu verschäumenden Mischung wird in einem Behandlungsraum vorgenommen. Bei einer diskontinuierlichen Ausführungsform der Erfindung ist der Behandlungsraum allseitig verschlossen; grundsätzlich ist aber auch eine kontinuierliche Bestrahlung möglich, wobei die Mischung auf einem kontinuierlich laufenden Band gleichmäßig verteilt und durch eine zweiseitig offene, kanalförmige Behandlungszone an der Strahlungsquelle vorbeigeführt wird.

Erfindungsgemäß wird die Bestrahlung so durchgeführt, daß die Leistungsaufnahme der Lösung oder Dispersion zwischen 5 und 200, vorzugsweise zwischen 9 und 120 kW, bezogen auf 1 kg Wasser in der Lösung bzw. Dispersion liegt. Ist die aufgenommene Leistung geringer, dann findet kein Aufschäumen mehr statt und die Mischung härtet nur noch aus. Arbeitet man innerhalb des bevorzugten Bereichs, so schäumt die Mischung um so schneller, je größer die Leistungsaufnahme ist. Oberhalb von etwa 200 kW pro kg Wasser erhöht sich die Schäumgeschwindigkeit nicht mehr wesentlich.

Die Leistungsaufnahme kann nicht direkt gemessen werden, wohl aber die von der Strahlenquelle abgegebene und die vom Substrat wieder zurückgestrahlte Leistung. Unter Vernachlässigung der geringen Leistungsverluste entspricht die Leistungsaufnahme der Differenz zwischen abgegebener und zurückgestrahlter Leistung. Solange genügend Wasser im Substrat enthalten ist, beträgt das Verhältnis von abgegebener zu zurückgestrahler Leistung etwa 10 : 1. Dieses Verhältnis erniedrigt sich drastisch, wenn das Wasser als Hauptabsorber der Mikrowellen aus dem Substrat infolge Verdampfens entfernt ist. Es ist dann Zeit, die Bestrahlung abzubrechen. Der Schäumprozeß dauert im allgemeinen 15 Sekunden bis 20 Minuten, vorzugsweise 25 Sekunden bis 10 Minuten. Die Schäumzeit richtet sich dabei insbesondere nach der gewählten Leistungsaufnahme der Lösung bzw. Dispersion: je geringer die Leistungsaufnahme ist, desto länger muß bestrahlt werden.

Beim Bestrahlen stellt sich im Substrat zunächst die Siedetemperatur des Hilfstreibmittels bei dem herrschenden Druck ein; wenn dieses verdampft ist, steigt die Temperatur auf die Siedetemperatur des Wassers an. Vorteilhaft wird bei vermindertem Druck, vorzugsweise bei 400 bis 900 mbar verschäumt.

Bei einer bevorzugten Ausführungsform der Erfindung wird der fertige Schaumstoff noch einer Temperaturbehandlung unterworfen. Er wird dabei 1 Minute bis 180 Minuten, vorzugsweise 3 bis 60 Minuten lang auf Temperaturen zwischen 120 und 260°C, vorzugsweise zwischen 150 und 250°C, erhitzt, wobei Wasser, Treibmittel und Formaldehyd weitgehend entfernt werden und eine Nachhärtung des Schaumharzes erfolgt. Diese Temperaturbehandlung kann unmittelbar anschließend an die Schaumherstellung in derselben Apparatur oder in einer nachgeschalteten Apparatur erfolgen; sie kann aber auch zu einem späteren Zeitpunkt unabhängig vom Schäumprozeß durchgeführt werden. Getemperte Schaumstoffe zeigen eine wesentlich geringere Neigung zum Schwinden und weisen eine geringere Gleichgewichtsfeuchte auf als ungetemperte Produkte. Auch die Formaldehyd-Emission ist stark verringert.

Die Temperung kann sowohl thermisch als auch durch dielektrische Bestrahlung mit Mikrowellen der Frequenz 2,45 GHz vorgenommen werden.

Bei einer weiteren bevorzugten Ausführungsform der Erfindung preßt man den Schaumstoff vor oder nach dem eventuellen Tempern ein oder mehrere Male um 40 bis 90% seiner ursprünglichen Höhe zusammen und läßt ihn sich dann wieder ausdehnen. Durch diesen Walkprozeß werden vermutlich Reste von harten Bereichen im Zellgerüst zerstört. Dies führt zu einer Erhöhung der Elastizität des Schaums und zu geringerem Schrumpfen bei der Wärmelagerung.

Die erfindungsgemäß hergestellten Schaumstoffe zeichnen sich durch folgende Eigenschaften aus:

a) Ihre Rohdichte nach DIN 53 420 liegt zwischen 1,6 und 30, vorzugsweise zwischen 2 und 20 $[g \cdot l^{-1}]$;

b) die Wärmeleitzahl nach DIN 52 612 ist kleiner als 0,06, vorzugsweise kleiner als 0,04 $[W \cdot m^{-1} \cdot {}^{\circ}K^{-1}]$;

c) die Stauchhärte nach DIN 53 577 bei 60% Stauchung, dividiert durch die Rohdichte liegt unter 0,3, vorzugsweise unter 0,2 $[N \cdot cm^{-2}/g \cdot l^{-1}]$, wobei bei der Bestimmung der Stauchhärte bei 60% Stauchung eine Wiedererholung des Schaumstoffs auf mindestens 70%, vorzugsweise mindestens 90% und insbesondere 95% seiner ursprünglichen Abmessung erfolgen muß;

d) der Elastizitätsmodul in Anlehnung an DIN 53 423, dividiert durch die Rohdichte liegt unter 0,25, vorzugsweise unter 0,15 $[N \cdot mm^{-2}/g \cdot l^{-1}]$;

e) der Biegeweg beim Bruch nach DIN 53 423 ist größer als 10, vorzugsweise größer als 15 [mm];

f) der Druckverformungsrest nach DIN 53 572 bei 50%iger Stauchung ist kleiner als 45%, vorzugsweise kleiner als 30% und insbesondere kleiner als 10%;

g) die dynamische Steifigkeit nach DIN 18 165 bei einer Plattendicke von 50 mm ist kleiner als 20, vorzugsweise kleiner als 10 und insbesondere kleiner als 5 $[N \cdot cm^{-3}]$;

h) sie sind nach DIN 4102 mindestens normalentflammbar, vorzugsweise schwerentflammbar.

Die Schaumstoffe können als Platten, Blöcke oder Bahnen mit einer Höhe bis zu 2 m hergestellt werden oder als Schaumfolien mit einer Dicke von wenigen mm. Die bevorzugte Schaumhöhe (in Schäumrichtung) liegt bei Verwendung von Mikrowellen der Frequenz 2,45 GHz zwischen 60 cm und 150 cm. Aus derartigen Schaumstoffblöcken können alle erwünschten Platten- bzw. Folienstärken herausgeschnitten werden. Die Schaumstoffe können ein- oder beidseitig mit Deckschichten versehen oder kaschiert werden, z. B. mit Papier, Pappe, Glasvlies, Holz, Gipsplatten, Metallblechen oder -folien, Kunststoff-Folien, die ggf. auch geschäumt sein können.

Das Hauptanwendungsgebiet der erfindungsgemäß hergestellten Schaumstoffe ist die Wärme- und Schalldämmung von Gebäuden und Gebäudeteilen, insbesondere von Zwischenwänden, aber auch von Dächern, Fassaden, Türen und Fußböden; weiterhin die Wärme- und Schalldämmung von Fahrzeugen und Flugzeugen, sowie die Tieftemperaturisolierung, z. B. von Kühlhäusern, Öltanks und Behältern von Flüssiggas. Weitere Anwendungsgebiete sind die Verwendung als isolierende Wandverkleidung, sowie als isolierendes und stoßdämmendes Verpackungsmaterial.

Die in den Beispielen genannten Teile, Prozente und Verhältnisse beziehen sich auf das Gewicht.

Beispiel 1

In einem offenen Gefäß wurde ein sprühgetrocknetes Melamin/Formaldehyd-Vorkondensat (Molverhältnis 1 : 3, Molekulargewicht etwa 400) zu einer wäßrigen Lösung mit 3% Ameisensäure und 2% Natriumdodecylbenzolsulfonat, wobei die Prozentzahlen auf das Melaminharz bezogen sind, gegeben. Die Konzentration des Harzes, bezogen auf die Mischung aus Harz und Wasser, betrug 74,0%, die Viskosität 230 dPas. Die Mischung wurde kräftig gerührt, dann wurden 33% Trichlortrifluoräthan zugegeben. Es wurde so lange (etwa 3 Minuten lang) weitergerührt, bis eine homogene Dispersion entstand. Ein Teil dieser Dispersion wurde auf eine Polyäthylenfolie aufgetragen und auf den Boden des Behandlungsraums gelegt. Als solcher diente ein 1 m hoher Zylinder mit einem Durchmesser von 35 cm aus Polypropylen, der innen mit einer Folie aus Schaumpolystyrol ausgekleidet war. Der Behandlungsraum wurde von oben und unten mittels Magnetron als Ultrahochfrequenz-Strahlungsquellen bestrahlt. Die Strahlungsfrequenz betrug 2,45 GHz, die Leistungsaufnahme des Gemisches 110 kW pro kg Wasser. Die Entformzeit, d. h. die Zeit für Schäumen und Härten, lag bei etwa 60 sec.

Der frisch hergestellte, 1 m hohe Schaumstoff wurde anschließend einer Temperung bei etwa 230° C während einer Zeitdauer von 20 min unterworfen. Der Schaumstoffblock wurde dann in 10 cm dicke Platten geschnitten, die mehrere Male durch Zusammenpressen um etwa 70% ihrer ursprünglichen Höhe gewalkt wurden.

Eigenschaften siehe Tabelle.

5

Tabelle

| | |
|---|---|
| Rohdichte: | 4 $[g \cdot l^{-1}]$ |
| Wärmeleitzahl: | 0,04 $[W \cdot m^{-1} \cdot °K^{-1}]$ |
| Stauchhärte: | 0,18 $[N \cdot cm^{-2}]$ |
| Wiedererholung: | 95% |
| Elastizitätsmodul: | 0,6 $[N \cdot mm^{-2}]$ |
| Biegung beim Bruch: | 20 mm |
| Druckverformungsrest: | 6% |
| dynam. Steifigkeit: | 1,3 $[N \cdot cm^{-3}]$ |
| Baustoffklasse: | B 1 (schwerentflammbar) |

Beispiel 2

In einem offenen Gefäß wurde eine 71%ige, wäßrige Lösung eines Melamin-Formaldehyd-Vorkondensats (Molverhältnis 1 : 2, mit 6% Natriumbisulfit modifiziert) mit einer Viskosität von 50 Pas zusammen mit 1% $C_{12}$- bis $C_{18}$-alkylsulfonsaurem Natrium, 1% eines Emulgators aus einem sulfatierten Talgfettalkohol, der mit 100 Mol Ethylenoxid pro Mol Alkohol modifiziert war, 1,8% Ameisensäure, sowie 20% Trichlortrifluorethan (wobei die Prozentzahlen sich auf das Festharz beziehen) mittels eines hochtourigen Rührers emulgiert. Ein Teil der homogenen Emulsion wurde auf den Boden eines Behandlungsraumes mit den Dimensionen 80 × 80 × 80 cm aufgebracht. Das Wandmaterial bestand aus glasmattenverstärkten Polyester der Stärke 10 mm. Der Behandlungsraum wurde von oben und unten mit einem Magnetron der Frequenz 2,45 GHz bestrahlt. Die Leistungsaufnahme des Gemisches betrug 75 kW pro kg Wasser. Die Zeit für Schäumen und Härten betrug etwa 2 Minuten.

Unmittelbar anschließend erfolgte die Temperung bei der gleichen Strahlungsenergiedichte. Sie wurde 5 Minuten lang durchgeführt. Dabei wurde die Leistungsaufnahme kontinuierlich in dem Maß angehoben, in dem das Wasser aus dem Schaum entwich. Der frisch hergestellte Schaumstoff war unmittelbar nach der Entfernung um 3,5% linear geschrumpft und absolut trocken. An der Luft erfolgte eine allmähliche Wasseraufnahme bei zu einer Gleichgewichtsfeuchte von 5%. Damit war ein leichtes Quellen verbunden, so daß der Gesamtschwund 3,0% betrug. Der fertige Schaumstoffblock mit einer Höhe von 80 cm und einer Dichte von 4,5 $g \cdot l^{-1}$ wurde anschließend zu 10 cm dicken Platten geschnitten.

**Patentansprüche für die Vertragsstaaten BE, CH, DE, FR, GB, IT, LI, NL, SE**

1. Verfahren zur Herstellung von elastischen Schaumstoffen auf Basis eines Melamin/Formaldehyd-Kondensationsproduktes durch Verschäumen einer wäßrigen oder alkoholischen Lösung oder Dispersion, welche ein Melamin/Formaldehyd-Vorkondensat, einen Emulgator, ein Treibmittel und einen Härter, sowie ggf. übliche Zusatzstoffe enthält, und anschließendes Vernetzen des Vorkondensates, dadurch gekennzeichnet, daß zum Verschäumen und Vernetzen die Lösung oder Dispersion durch Bestrahlung mit Mikrowellen im Frequenzbereich von 0,915 GHz bis 100 GHz derart erhitzt wird, daß die Leistungsaufnahme der Lösung oder Dispersion zwischen 5 und 200 kW pro kg Wasser in der Lösung bzw. Dispersion liegt.

2. Verfahren zur Herstellung von elastischen Schaumstoffen auf Basis eines Melamin/Formaldehyd-Kondensationsproduktes, dadurch gekennzeichnet, daß ein nach Anspruch 1 hergestellter Schaumstoff anschließend 1 bis 180 Minuten lang auf Temperaturen zwischen 120 und 260°C erhitzt wird, wobei Wasser, Treibmittel und Formaldehyd weitgehend entfernt werden, und eine weitere Aushärtung erfolgt.

3. Verfahren nach Anspruch 1 oder 2, dadurch gekennzeichnet, daß man den Schaumstoff anschließend ein oder mehrere Male um 40 bis 90% seiner ursprünglichen Höhe zusammenpreßt und dann wieder ausdehnen läßt.

4. Elastische Schaumstoffe auf Basis von Melamin/Formaldehyd-Kondensaten, hergestellt nach Anspruch 1, dadurch gekennzeichnet, daß ihre Dichte zwischen 1,6 und 30, vorzugsweise zwischen 2 und 20 $[g \cdot l^{-1}]$ liegt.

5. Platten oder Bahnen aus elastischen Schaumstoffen auf Basis von Melamin/Formaldehyd-Kondensaten, hergestellt nach Anspruch 1, dadurch gekennzeichnet, daß ihre Schaumhöhe 60 bis 150 cm beträgt.

**Patentansprüche für den Vertragsstaat AT**

1. Verfahren zur Herstellung von elastischen Schaumstoffen auf Basis eines Melamin/Formaldehyd-Kondensationsproduktes durch Verschäumen einer wäßrigen oder alkoholischen Lösung oder Dispersion, welche ein Melamin/Formaldehyd-Vorkondensat, einen Emulgator, ein Treibmittel und einen Härter, sowie ggf. übliche Zusatzstoffe enthält, und anschließendes Vernetzen des Vorkondensates, dadurch gekennzeichnet, daß zum Verschäumen und Vernetzen die Lösung oder Dispersion durch Bestrahlung mit Mikrowellen im Frequenzbereich von 0,915 GHz bis 100 GHz derart erhitzt wird, daß die Leistungsaufnahme der Lösung oder Dispersion zwischen 5 und 200 kW pro kg Wasser in der Lösung bzw. Dispersion liegt.

2. Verfahren zur Herstellung von elastischen Schaumstoffen auf Basis eines Melamin/Formaldehyd-Kondensationsproduktes, dadurch gekennzeichnet, daß ein nach Anspruch 1 hergestellter Schaumstoff anschließend 1 bis 180 Minuten lang auf Temperaturen zwischen 120 und 260°C erhitzt wird, wobei Wasser, Treibmittel und Formaldehyd weitgehend entfernt werden, und eine weitere Aushärtung erfolgt.

3. Verfahren nach Anspruch 1 oder 2, dadurch gekennzeichnet, daß man den Schaumstoff anschließend ein oder mehrere Male um 40 bis 90% seiner ursprünglichen Höhe zusammenpreßt und dann wieder ausdehnen läßt.

4. Platten oder Bahnen aus elastischen Schaumstoffen auf Basis von Melamin/Formaldehyd-Kondensaten, hergestellt nach Anspruch 1, dadurch gekennzeichnet, daß ihre Schaumhöhe 60 bis 150 cm beträgt.

## Claims for the Contracting States: BE, CH, DE, FR, GB, IT, LI, NL, SE

1. A process for the manufacture of a resilient foam, based on a melamine-formaldehyde condensate, by foaming an aqueous or alcoholic solution or dispersion which contains a melamine-formaldehyde precondensat, an emulsifier, a blowing agent and a hardener, with or without conventional additives, and then crosslinking the precondensate, wherein, to effect foaming and crosslinking, the solution or dispersion is heated by irradiation with microwaves in the frequency range from 0.915 to 100 GHz in such a manner that the power uptake of the solution or dispersion is from 5 to 200 kw per kg of water in the solution or dispersion.

2. A process for the manufacture of a resilient foam based on a melamine-formaldehyde condensate, wherein the foam manufactured as claimed in claim 1 is subsequently heated for from 1 to 180 minutes at from 120 to 260°C, during which water, blowing agent and formaldehyde are substantially removed and further hardening takes place.

3. A process as claimed in claim 1 or 2, wherein the foam is subsequently compressed one or more times by from 40 to 90% of its original height and allowed to recover.

4. A resilient foam based on a melamine-formaldehyde condensate and manufactured as claimed in claim 1, which has a density of from 1.6 to 30, preferably from 2 to 20, $[g \cdot l^{-1}]$.

5. Panels or slabs of a resilient foam based on a melamine-formaldehyde condensate and manufactured as claimed in claim 1, which are from 60 to 150 cm thick.

## Claims for the Contracting State: AT

1. A process for the manufacture of a resilient foam, based on a melamine-formaldehyde condensate, by foaming an aqueous or alcoholic solution or dispersion which contains a melamine-formaldehyde precondensate, an emulsifier, a blowing agent and a hardener, with or without conventional additives, and then crosslinking the precondensate, wherein, to effect foaming and crosslinking, the solution or dispersion is heated by irradiation with microwaves in the frequency range from 0.915 to 100 GHz in such a manner that the power uptake of the solution or dispersion is from 5 to 200 kw per kg of water in the solution or dispersion.

2. A process for the manufacture of a resilient foam based on a melamine-formaldehyde condensate, wherein the foam manufactured as claimed in claim 1 is subsequently heated for from 1 to 180 minutes at from 120 to 260°C, during which water, blowing agent and formaldehyde are substantially removed and further hardening takes place.

3. A process as claimed in claim 1 or 2, wherein the foam is subsequently compressed one or more times by from 40 to 90% of its original height and allowed to recover.

4. Panels or slabs of a resilient foam based on a melamine-formaldehyde condensate and manufactured as claimed in claim 1, which are from 60 to 150 cm thick.

## Revendications pour les Etats contractants: BE, CH, DE, FR, GB, IT, LI, NL, SE

1. Procédé de préparation de matières alvéolaires élastiques à base d'un produit de condensation mélamine/formaldéhyde, par expansion d'une solution ou dispersion aqueuse ou alcoolique et qui contient un précondensat mélamine/formaldéhyde, un émulsifiant , un gonflant et un durcisseur, ainsi qu'éventuellement des additifs usuels, et ensuite réticulation du précondensat, caractérisé par le fait que, pour l'expansion et la réticulation, la solution ou la dispersion est chauffée par radiation avec des microondes dans la zone de fréquence de 0,915 GHz à 100 GHz de telle sorte que la puissance absorbée de la solution ou de la dispersion se situe entre 5 et 200 kW/kg d'eau dans la solution ou dispersion.

2. Procédé de préparation de matières alvéolaires élastiques à base d'un produit de condensation mélamine/formaldéhyde, caractérisé par le fait que l'on chauffe une matière alvéolaire préparée selon la revendication 1 pendant 1 à 180 minutes, à une température comprise entre 120 et 260°C, l'eau, le gonflant et le formaldéhyde étant à peu près complètement éliminés, et un durcissement complémentaire se produisant.

3. Procédé selon la revendication 1 ou 2, caractérisé par le fait que l'on comprime la matière alvéolaire ensuite une ou plusieurs fois à 40 à 90% de sa hauteur initiale puis on la laisse ensuite se redilater.

4. Matière alvéolaire élastique à base de condensats mélamine/formaldéhyde, préparée selon la revendication 1, caractérisée par le fait que sa densité est comprise entre 1,6 et 30, de préférence entre 2 et 20 (g · l$^{-1}$).

5. Plaques ou bandes en matière alvéolaire élastique, à base de condensats mélamine/formaldéhyde, préparées selon la revendication 1, caractérisée par le fait que sa hauteur d'expansion est de 60 à 150 cm.

**Revendications pour l'Etat contractant: AT**

1. Procédé de préparation de matières alvéolaires élastiques à base d'un produit de condensation mélamine/formaldéhyde, par expansion d'une solution ou dispersion aqueuse ou alcoolique et qui contient un précondensat mélamine/formaldéhyde, un émulsifiant, un gonflant et un durcisseur, ainsi qu'éventuellement des additifs usuels, et ensuite réticulation du précondensat, caractérisé par le fait que, pour l'expansion et la réticulation, la solution ou la dispersion est chauffée par radiation avec des microondes dans la zone de fréquence de 0,915 GHz à 100 GHz de telle sorte que la puissance absorbée de la solution ou de la dispersion se situe entre 5 et 200 kW/kg d'eau dans la solution ou dispersion.

2. Procédé de préparation de matières alvéolaires élastiques à base d'un produit de condensation mélamine/formaldéhyde, caractérisé par le fait que l'on chauffe une matière alvéolaire préparée selon la revendication 1 pendant 1 à 180 minutes, à une température comprise entre 120 et 260°C, l'eau, le gonflant et le formaldéhyde étant à peu près complètement éliminés, et un durcissement complémentaire se produisant.

3. Procédé selon la revendication 1 ou 2, caractérisé par le fait que l'on comprime la matière alvéolaire ensuite une ou plusieurs fois à 40 à 90% de sa hauteur initiale puis on la laisse ensuite se redilater.

4. Plaques ou bandes en matière alvéolaire élastique, à base de condensats mélamine/formaldéhyde, préparées selon la revendication 1, caractérisée par le fait que sa hauteur d'expansion est de 60 à 150 cm.